## Europäisches Patentamt
## European Patent Office
## Office européen des brevets

(19)

(11) Numéro de publication: **0 067 744**
**B1**

(12) # FASCICULE DE BREVET EUROPEEN

(45) Date de publication du fascicule du brevet:
**10.10.84**

(51) Int. Cl.³: **C 01 F 7/00,** C 01 F 7/32,
C 01 F 7/16, C 01 G 1/02

(21) Numéro de dépôt: **82400958.3**

(22) Date de dépôt: **25.05.82**

(54) **Procédé de préparation d'alumines ou de spinelles alumine-magnésie très divisés à structure poreuse homogène.**

(30) Priorité: **02.06.81 FR 8110872**

(43) Date de publication de la demande:
**22.12.82 Bulletin 82/51**

(45) Mention de la délivrance du brevet:
**10.10.84 Bulletin 84/41**

(84) Etats contractants désignés:
**AT BE CH DE FR GB IT LI LU NL SE**

(56) Documents cités:
**EP - A - 0 043 751**
**DE - A - 1 592 128**
**DE - A - 1 619 809**
**DE - A - 2 419 544**
**US - A - 4 085 201**

(73) Titulaire: **CRICERAM, 23, rue Balzac, F-75008 Paris (FR)**

(72) Inventeur: **Bachelard, Roland, 99, Grande-rue de la Guillotière, F-69007 Lyon (FR)**
Inventeur: **Lamalle, Maurice, Le Vieux Chêne 38, avenue Georges Clémenceau, F-69230 Saint-Genis-Laval (FR)**

(74) Mandataire: **Pascaud, Claude et al, PECHINEY 28, rue de Bonnel, F-69433 Lyon Cedex 3 (FR)**

BUNDESDRUCKEREI BERLIN

## Description

La présente invention concerne un procédé de préparation de poudres fines d'alumines ou de spinelles non stoechiométriques à base d'alumine par décomposition thermique d'alun d'ammonium ou de mélanges d'alun d'ammonium et de sulfate double hydraté magnésium et d'ammonium. L'invention permet l'obtention d'un produit se caractérisant par sa structure poreuse particulièrement fine et homogène lorsqu'il est comprimé isostatiquement à des pressions de compactage d'au moins 98 MN/m$^2$ et sa très grande pureté ($\geq$99,98% Al$_2$O$_3$ hors sulfate et notamment par un taux de soufre résiduaire inférieur à 0,5%) et une aire spécifique d'au moins 145 m$^2$ g$^{-1}$.

L'invention fournit un moyen d'obtenir des produits homogènes constitués de particules élémentaires très fines et présentant une aptitude à la compression améliorée.

Ces poudres servent spécifiquement à la fabrication de »barrières« pour l'enrichissement isotopique par diffusion gazeuse, à la fabrication d'éléments pour l'ultrafiltration et comme charge minérale dans certains papiers servant à faire des condensateurs.

Elles peuvent également être utilisées avec profit dans le polissage des métaux et du carbone et comme catalyseur ou support de catalyseur.

La technique classique de traitement de l'alun dans des têts circulant dans des fours à passage (ex. four tunnel) ne permet généralement pas d'obtenir des produits ayant des surfaces supérieures à 125 m$^2$ g$^{-1}$ pour des teneurs en soufre résiduaire inférieures à 0,5%. Il est bien connu toutefois que ces produits ne sont pas très homogènes et que l'aire spécifique qui leur est attribuée doit être considérée comme une moyenne. Cela s'explique aisément par les inégalités de traitement subies par le produit selon qu'il se trouve au sommet ou au fond du creuset. Ces différences concernent notamment des décalages dans le protocole de chauffage et la composition des gaz entourant le produit en cours de formation. Cette hétérogénéité a des conséquences sur la structure poreuse de l'alumine. En effet, lorsque, par exemple, la poudre a été localement surcalcinée il a pu se former un peu de corindon. Or cette transformation cristalline s'accompagne toujours d'un grossissement important des grains qui donne naissance à une macroporosité rhédibitoire dans le spectre des pores. A l'opposé, une région insuffisamment calcinée contiendra encore une forte proportion de sulfate non décomposé et présentera une très forte aire spécifique. A la compression cette hétérogénéité provoquera un élargissement préjudiciable de la distribution des volumes poreux.

Par ailleurs, les appareils à faible temps de séjour, plus productifs, doivent travailler à haute température pour réaliser rapidement la décomposition des sulfates. Mais la suchauffe imposée au produit ne permet pas dans ce cas d'atteindre des surfaces spécifiques élevées et de plus le résultat est très hétérogène.

Il existe donc un besoin industriel de disposer d'un procédé qui permette de préparer de manière faible à partir d'alun d'ammonium, des alumines ou des spinelles ayant des surfaces spécifiques intermédiaires entre 100 et 200 m$^2$ g$^{-1}$ et caractérisées par une très grande homogénéité qui garantissent une structure poreuse unimodale et resserrée.

La présente invention est fondée sur l'observation que l'obtention de poudres d'alumine très fines à porosité homogène à partir d'alun d'ammonium demande une maîtrise totale des conditions de traitement de la matière première. Ce contrôle est nécessaire pour imposer un protocole de traitement thermique défini à l'ensemble du produit en cours d'évolution. En outre, dans la phase de décomposition des sulfates, il permet de choisir et d'imposer la composition de la phase gazeuse entourant le solide.

Il est connu que cette réaction comporte plusieurs étapes qui successivement donnent naissance à l'alun fondu puis à l'alun déshydrate, au sulfate d'aluminium et enfin à l'alumine.

L'invention concerne un procédé de préparation d'une pouche d'alumine pure ou de spinelle alumine-magnésie pur non stoechiométrique à partir de compositions à base d'alun d'ammonium dans lequel on effectue une déshydratation de l'alun en présence d'un agent gonflant tel qu'un hydrate de carbone et/ou de l'urée, caractérisé par le fait que l'on déshydrate l'alun fondu de façon à obtenir des sels déshydratés dont la masse volumique en vrac soit inférieure à 0,2 kg dm$^{-3}$ et que l'on fait suivre cette déshydratation d'une calcination suivant un protocole de chauffage comportant au moins un palier intermédiaire situé entre 750 et 850°C d'une durée telle qu'à l'issue dudit palier, la teneur en soufre résiduaire ne dépasse pas 3%, l'ultime étape de calcination étant effectuée à une température située entre 900 et 1050°C.

Le procédé de la présente invention consiste à réaliser une dispersion aussi grande que possible de l'alun déshydraté de façon à obtenir une masse volumique en vrac inférieur à 0,2 kg/dm$^3$, puis à chauffer celui-ci suivant un protocole comportant au moins un palier intermédiaire à achever l'élimination du soufre en terminant la calcination à une température ne dépassant pas 1050°C. On dispose de différentes solutions pour réaliser une dispersion satisfaisante de l'alun déshydraté.

L'une d'entre elles consiste à utiliser la particularité que présente ce produit de donner lieu à une forte expansion en volume au cours de sa déshydratation à partir de l'alun fondu. De plus, certains additifs comme les hydrates de carbone (sucres, amidon) ou l'urée seuls ou en mélange peuvent jouer le rôle d'agent gonflant et accroître le volume de la »meringue« d'alun déshydraté. En réalité, plus que l'encombrement du produit, il faut, dans ce cas, s'attacher à son état de dispersion. En effet, dans la »meringue«, l'alun déshydraté forme des petites alvéoles emprisonnant des bulles de gaz. Le produit sera d'autant mieux dispersé que les bulles seront plus petites et donc que l'épaisseur des parois de l'alvéole sera plus mince. Avec un surce par exemple, on a pu vérifier que cet effet de dispersion se répercutait sur l'état de division du produit final. Toutes choses étant égales par ailleurs, l'aire spécifique du produit croît avec la proportion de source ajoutée à l'alun.

En dehors des adjuvants de dispersion, il existe la possibilité de choisir une technologie de déshydratation de l'alun qui permette d'obtenir le même résultat. C'est notamment le cas de l'automisation de l'alun fondu par un courant de gaz chauds portés par exemple à 300°C. La déshydratation se produit quasi instantanément et donne une poudre formée de particules sphériques, creuses ayant une masse volumique en vrac d'environ 0,1 kg dm$^{-3}$. La décomposition thermique des sulfates anhydres qui intervient ensuite nécessite de porter le produit à plus de 650°C.

En fait, pour effectuer l'opération dans des conditions de durée compatibles avec la pratique industrielle, on devra chauffer au moins à 900°C pour amener le taux de soufre résiduaire à moins de 0,5%. Mais pour préserver une texture favorable aux objectifs recherchés, il est apparu qu'il était très avantageux d'appliquer un protocole de chauffage progressif comportant au moins un palier dans la zone de température allant de 750 à 850°C. Sa durée sera telle qu'à l'issue de cette phase le taux de soufre résiduaire ne dépasse pas 3%. La calcination sera ensuite poursuivie à une température plus élevée pour achever l'élimination du soufre dans des conditions telles que le grossissement des cristaux soit limité au minimum. En fait cette ultime étape se déroulera entre 900 et 1050°C.

Plusieurs modes de réalisation peuvent être envisagés pour effectuer la décomposition des sulfates.

De manière classique, le produit pourra être préparé en nacelles dans des fours continus à passage ou dans des fours discontinus. Dans ces derniers, on imposera un cycle thermique réalisant successivement toutes les étapes du traitement y compris la déshydratation. Les fours à passage comporteront plusieurs secteurs à des niveaux de température différents correspondant aux diverses séquences. Ces technologies éprouvées sont peu favorables aux échanges de chaleur et de matière. Or, s'agissant de réactions équilibrées et fortement endothermiques, les processus sont freinés et les opérations de longue durée. Pour en faciliter l'avancement et dans le but d'obtenir des produits ayant des surfaces spécifiques suffisantes, on est contraint d'opérer en couche de faible épaisseur et avec un balayage du four par un gaz contenant le moins possible de vapeur d'eau et d'anhydrides sulfureux ou sulfurique. Un four travaillant sous vide constituerait une alternative intéressante pour les transferts de matière, malheureusement beaucoup moins avantageuse pour les transferts thermiques.

D'autres technologies plus productives peuvent être envisagées comme le lit fixe ou le lit drainé revendiqué par la Société CRICERAM dans sa demande de brevet français FR-A-2 486 058 déposée le Ier Juillet 1980. Cette demande de brevet FR-A-2 486 058 décrit un procédé de préparatin d'alumines de haute pureté à partir d'alun d'ammonium dans lequel on réalise séparément la déshydratation de l'alun puis la décomposition thermique de l'alun déshydraté, caractérisé par le fait qu'au cours de ladite décomposition thermique on force un gaz chaud et sec à traverser la couche d'alun déshydraté de façon à extraire en continu les produits gazeux de la réaction tout en empêchant la mise en mouvement éventuelle du solide par le vecteur gazeux. Cette technique est appelée »lit draine«. Auparavant, en raison de la fragilité et de la finesse du produit, il faut admettre de renoncer à utiliser dans ce cas, le lit fluidisé qui tue pourtant l'un des meilleurs systèmes pour accélérer les échanges. En effet, la fluidisation de l'alun déshydraté s'accompagne d'une désagrégation du produit par attrition avec un taux d'envolement de particules fines inacceptable. Le produit doit donc être traité en lit fixe ce qui implique des vitesses de gaz faibles peu propices aux échanges. Des conditions déjà plus favorables peuvent être réalisées en lit drainé qui permet d'utiliser un débit d'air très supérieur au débit d'entraînement, mais toutefois limité par les pertes de charge dans le lit de matière en cours d'évolution.

La demanderesse a constaté avec surprise que l'alun déshydraté pouvait être traité en lit fixe ou en lit drainé après avoir été aggloméré par granulation, compactage, pastillage . . . sans que la compacité de la poudre ainsi conditionnée constitue un handicap pour la vitesse de décomposition ou pour l'homogénéité du produit final. Cette solution offre de multiples avantages. En effet, l'alun déshydraté étant présenté par exemple sous la forme de pastilles de plusieurs millimètres de diamètre équivalent, il divient possible de constituer un lit fixe très poreux à travers lequel on peut souffler un débit de gaz très élevé sans provoquer de pertes de charge importantes. On constate alors que les caractéristiques finales de l'alumine obtenue dépendent, toutes choses égales par ailleurs, de la composition de l'atmosphère entourant les pastilles ou granulés. Il est donc possible de moduler les qualités du produit en ajustant la composition de la phase gazeuse qui, du fait des débits importants admis, n'est par ailleurs que faiblement influencée par les produits de décomposition des sulfates ($NH_3$, $H_2O$, $SO_3$, $SO_2$). Les gaz qui jouent un rôle sur la texture de l'alumine sont la vapeur d'eau et les oxydes de soufre. On pourra de cette manière traiter sans inconvénient des charges importantes constituant des lits épais en augmentant le débit de gaz d'entraînement. Un autre avantage de la possibilité de conditionner le produit en agglomérats est l'amélioration de la productivité du système. En effet, alors qu'une meringue déshydratée telle qu'elle est obtenue a une masse volumique généralement inférieure à 0,1 kg dm$^{-3}$, un lit de pastilles pourra avoir une densité de remplissage supérieure à 0,7 kg dm$^{-3}$.

La technique du lit drainé décrite dans la demande de brevet FR-A-2 486 058 mentionnée ci-dessus s'applique particulièrement bien dans ces conditions car elle permet justement de forcer des gaz à travers le lit d'agglomérats à un débit tel que la vitesse de fluidisation ou même d'entraînement soit atteinte ou dépassée sans que le produit ne soit mis en mouvement par le gaz vecteur. Ces conditions sont encore plus favorables que le lit fixe à l'obtention de grande surface et à la rapidité de l'opération. Le gaz vecteur qui entraîne les produits gazeux de la décomposition apportera généralement les calories nécessaires à la transformation.

L'invention s'applique aux alumines ex-alun. De plus, la demanderesse a observé que, pour obtenir la structure poreuse recherchée, l'addition d'autres oxydes pouvaient jouer un rôle favorable. C'est le cas notamment de la magnésie qui en se combinant avec l'alumine donne lieu à la formation d'un produit à structure spinelle constituée par ne solution solide de spinelle $Al_2O_4Mg$ dans $Al_2O_3$. Différents sels de magnésium peuvent être envisagés, mais on préfère ceux qui sont solubles dans l'alun fondu. C'est le cas du sulfate double hydraté de magnésium et ammonium : $(NH_4)_2Mg (SO_4)_2, 6 H_2O$.

La miscibilité totale à l'état fondu de l'alun et de ce sulfate de magnésium garantit l'homogénéité de la répartition du magnésium. L'addition de magnésie a plusieurs conséquences sur la structure et la texture de la poudre obtenue. En effet, elle permet dans une certaine mesure de moduler l'aire spécifique du produit. Plus forte est la teneur en MgO et plus faible est l'aire spécifique. De ce fait, compte-tenu de l'objectif qui est de préparer la poudre la plus fine à structure poreuse unimodale, on est pratiquement limité à l'utilisation de rapports molaires $Al_2O_3/MgO \geq 3$. Un autre avantage dû à la présence de magnésie dans l'alumine est un resserrement de la distribution des rayons de pores autour de la valeur maximum. Les exemples suivants illustrent l'invention de façon non limitative.

## Exemple 1

Dans une nacelle en quartz on mélange 56,66 parties d'alun d'ammonium cristallisé avec 3,76 parties de sulfate double de magnésium et d'ammonium hydraté, 6 parties d'urée et 1 partie de saccharose. La composition du système est telle que le rapport molaire $Al_2O_3/MgO$ soit égal à 6. Les produits sont amenés à la fusion puis chauffés pour évaporer l'eau. La température s'élève progressivement et cette première phase s'achève en portant la meringue formée à 500°C où elle est maintenue pendant 20 minutes. La masse volumique apparente du mélange déshydraté est 0,07 kg $dm^{-3}$.

Ce mélange de sulfates déshydratés est introduit dans un four préchauffé à 800°C. Il reste pendant 3 heures à cette température. Le protocole de calcination prévoit ensuite une montée à 930°C. Celle-ci s'effectue en 25 minutes. Arrivé à ce palier, le produit y est maintenu pendant 1 heure 30 minutes puis retiré du four. On recueille un spinelle ne contenant pas de magnésie libre visible par diffraction X. Sa teneur en soufre résiduaire est déterminée par fluorescence C : 0,50%. Son aire spécifique est mesurée par la méthode BET après désorption à 150°C sous balayage d'azote. Elle est de 148,1 $m^2 g^{-1}$.

Ce produit est comprimé isostatiquement à 98 MN $m^{-2}$. Puis sa porosité est mesurée par intrusion de mercure sous pression. On constate que sa porosité est unimodale mais que son maximum de volume poreux est constitué par des pores ayant des rayons compris entre 4 et 5 nm.

## Exemple 2

La composition du mélange est la suivante:

56,66 parties d'alun d'ammonium
3,76 parties de sulfate double hydraté de Mg et d'ammonium
6 parties d'urée
4 parties de saccharose

Le traitement de ce mélange est identique à celui appliqué à la composition de l'exemple 1.
La masse volumique en vrac du mélange déshydraté est 0,02 kg $dm^{-3}$.
L'analyse du produit final conduit aux résultats suivants:

— Nature du produit forme: spinelle $Al_2O_3/MgO$ de rapport molaire égal à 6.
— Absence de MgO libre (diffraction X).
— Teneur en S résiduaire: 0,50%.
— Surface spécifique, méthode BET: 172,7 $m^2 g^{-1}$.
— Porosité sur comprimé réalisée par compression isostatique à 98 $NM/m_2$ unimodale, maximum de volume poreux donné par des pores de rayons voisins de 4 nm.

0 067 744

### Exemple 3 (Comparatif)

Des cristaux d'alun sont chauffés sous vide en prenant soin d'éviter de les fondre. En portant progressivement la température de 85° C à 190° C sous un vide inférieur ou égal à 30 mm de mercure on élimine la presque totalité de l'eau de cristallisation du produit sans provoquer de gonflement ou d'éclatement des grains. On recueille de cette manière des grains d'alun déshydraté dont la masse volumique en vrac s'élève à 0,8 kg dm $^{3}$. Ce produit est placé dans un réacteur en inconel ayant la forme d'un cylindre vertical. La charge repose sur un lit horizontal de fibres alumineuses. Le système est chauffé d'une part électriquement à la périphérie du cylindre et d'autre part par de l'air chaud qui est soufflé à travers le lit dans le sens descendant. Une charge de ce produit déshydraté est introduite dans le réacteur à raison de 230 parties par $dm^2$ de section droite. Le débit d'air est de 1,4 $Nm^3$ h-1 par $dm^2$ de section de réacteur. Le four préablement chauffé à 500° C est rapidement porté à 850° C où il est maintenu pendant 3 heures puis à 930° C en 15 minutes et où il reste encore 2 heures.

On recueillle une alimine êta ne titrant pas plus de 0,12% de soufre et dont l'aire spécifique s'élève à 223,1 $m^2$ $g^{-1}$.

Comprimée à 98 $MN/m^2$, cette poudre pourtant extrêmement fine présente une porosité bimodale avec une population de micropores centrée sur un rayon de pores inférieur à 4 nm et une seconde de mésopores centrée autour de R = 55 nm.

Cet exemple montre que si la masse volumique en vrac du mélange déshydraté n'est pas dans le domaine revendiqué ( < 0,2 kg $dm^{-3}$), le produit obtenu n'a pas les caractéristiques mentionnées.

### Exemple 4 (Comparatif)

Dans une nacelle en quartz on mélange 56,66 parties d'alun d'ammonium critallisé et 3,76 parties de sulfate double hydraté de magnésium et d'ammonium.

Le mélange de réactifs est tel que le rapport molaire $Al_2O_3/MgO = 6$; il contient en outre 6% de saccharose et 2% d'urée.

La masse volumique en vrac des sels déshydratés est 0,04 kg $dm^{-3}$.

Pour réaliser le traitement thermique on dispose de 2 fours préchauffés respectivement à 500° C et à 930° C. Le mélange fondu est tout d'abord introduit dans le four à 500° C dans le but de réaliser la déshydratation. Le produit y est maintenu pendant 20 minutes en palier à 500° C.

Après refroidissement, la nacelle est plongée dans le four de calcination. Une fois la température de 930° C atteinte le produit reste 2 heures dans le four.

5 essais consécutifs ont conduit aux valeurs suivantes de l'aire spécifique du spinelle: 122 — 124 — 121 — 119 — 128 $m^6$ $g^{-1}$.

### Exemple 5

On procède à la même expérience que dans l'exemple 4 en opérant dans des conditions de traitement thermique différentes.

Pour cela on réalise tout d'abord un mélange de réactifs ayant rigoureusement la même composition que dans l'exemple précédent.

Le mode opératoire suivant est appliqué:

— fusion des réactifs
— introduction dans le four préchauffé à 500° C

et maintien à cette température pendant 20 minutes.

A ce stade on obtient des sulfates déshydratés dans des conditions rigoureusement identiques à celles de l'exemple précédent.

Ils sont alors introduits dans un four préchauffé à 785° C. Lorsque l'équilibre thermique est atteint, on prolonge le chauffage à 785° C pendant 3 heures. Puis, on monte à 930° C, ce qui demande 15 minutes et on s'y maintient encore 1 heure 30 minutes.

Les produits recueillis sont identifiés à des spinelles $Al_2O_3 - MgO$ de rapport molaire voisin de 6. Leurs surfaces spécifiques respectives sont de 171,7, 166,0, 171,5 $m^2$ $g^{-1}$.

Regroupés ils constituent un échantillon homogène ayant les caractéristiques suivantes:

— soufre résiduaire:  0,45%
  — surface BET:  170 $m^2$ $g^{-1}$
  — porosité unimodale avec un maximum de volume

poreux situé en-dessous de R = 4 nm (sur comprimé réalisé à 196 $MN/m^2$).

La rapprochement des exemples 4 et 5 démontre le rôle essentiel du palier intermédiaire de température sur la texture et la structure poreuse du spinelle.

5

### Exemple 6

On charge une nacelle en quartz avec le mélange suivant:

— 56,66 parties d'alun
— 4,51 parties de sulfate de Mg
— 1,84 partie de saccharose

Le mélange porté à la fusion est introduit dans un four préchauffé à 500°C pour y être déshydraté. La durée de chauffage est de 20 minutes à 500°C. Après refroidissement, le produit déshydraté est introduit dans un four ventilé préchauffé à 800°C. On reste 3 heures en palier à cette température avant de monter à 930°C où l'on maintient le chauffage pendant 1 heure 30 minutes. Après refroidissement on recueille une poudre de spinelle.

La masse volumique en vrac des sels déshydratés est 0,05 kg dm$^{-3}$.

La poudre de spinelle obtenue après calcination a une aire spécifique de 156,3 m$^2$ g$^{-1}$.

### Exemple 7

Dans une nacelle en quartz on réalise la déshydration du mélange suivant:

— 113,32 parties d'alun
— 7,52 parties de sulfate double hydraté de Mg et d'ammonium
— 2,40 parties de sucre.

On fond ce mélange et on le déshydrate dans un four préchauffé à 450°C. Le traitement à cette température dure 20 minutes.

La masse volumique en vrac du produit déshydraté est 0,09 kg dm$^{-3}$.

La meringue recueillie est broyée. On recueille une poudre dont la masse volumique en vrac est de 0,4 kg dm$^{-3}$.

La décomposition thermique du produit est effectuée dans le réacteur cylindrique vertical décrit dans l'exemple 3, fonctionnant en lit drainé.

Le gaz de drainage est de l'air contenant 4% d'eau en volume.

La charge de réactifs est de 156 g/dm$^2$ de section droite. Le débit de gaz chaud de drainage est de 1,4 Nm$^3$ h$^{-1}$ par dm$^2$ de section.

Le protocole de chauffage suivant est appliqué:

— introduction de la charge dans le four préchauffé,
— montée immédiate à 800°C et maintien à ce niveau pendant 3 heures,
— montée à 930°C en 15 minutes et palier de 2 heures à cette température.

Le passage de l'air au travers de la couche de poudre provoque déjà à froid une perte de charge d'environ 24 500 pascals. Dès le début de la décomposition la pression augmente rapidement dans le réacteur pour culminer vers 88 000 Pa puis redescendre progressivement vers 10 000 Pa vers la fin du palier à 800°C. Un petit à-coup de pression se manifeste encore au moment de la montée à 930°C, il est moins intense que le premier et s'efface rapidement.

Cette montée en pression du réacteur limite le débit d'air et l'épaisseur de la couche de produit à traiter.

A l'issue de l'opération, on recueille une poudre de spinelle dont l'aire spécifique est égale à 157,1 m$^2$ g$^{-1}$.

Sa structure poreuse est rigoureusement unimodale et le rayon des pores correspondant au maximum de volume poreux est situé entre 4 et 5 nanomètres.

### Exemple 8

On opère comme dans l'exemple 7 avec un gaz de drainage constitué d'air contenant 3,5% en volume d'eau.

Le débit de gaz de drainage est porté à 3,7 NM$^3$/hxdm$^2$.

Le spinelle formé a une teneur en soufre résiduaire de 0,26%. Son aire spécifique s'élève à 159,4 m$^2$ g$^{-1}$.

# 0 067 744

## Revendications

1. Procédé de préparation d'une poudre d'alumine pure ou de spinelle alumine-magnésie pur non stoechiométrique à partir de compositions à base d'alun d'ammonium dans lequel on effectue une déshydratation de l'alun en présence d'un agent gonflant tel qu'un hydrate de carbone et/ou de l'urée, caractérisé par le fait que l'on déshydrate l'alun fondu de façon à obtenir des sels déshydratés dont la masse volumique en vrac soit inférieure à 0,2 kg dm$^{-3}$ et que l'on fait suivre cette déshydratation d'une calcination suivant un protocole de chauffage comportant au moins un palier intermédiaire situé entre 750 et 850°C d'une durée telle qu'à l'issue dudit palier, la teneur en soufre résiduaire ne dépasse pas 3%, l'ultime étape de calcination étant effectuée à une température située entre 900 et 1050°C.

2. Procédé selon la revendication 1 dans lequel l'alun déshydraté de masse volumique en vrac inférieure à 0,2 kg dm$^{-3}$ est calciné en lit fixe après avoir été pastillé, granulé ou compacté.

3. Procédé selon la revendication 1 dans lequel la calcination est effectuée en lit drainé avec un débit de gaz de drainage supérieur à celui correspondant à la vitesse minimum de fluidisation du produit.

4. Procédé selon la revendication 2 ou 3 dans lequel le gaz qui traverse le lit contient de la vapeur d'eau ou des oxydes de soufre.

5. Poudre d'alumine ou de spinelle alumine-magnésie non stoechiométrique préparée selon l'une des revendications 1 à 4 ayant une teneur en soufre résiduaire au plus égale à 0,5%, une aire spécifique supérieure à 145 m$^2 \cdot$ g$^{-1}$ et une structure poreuse unimodale homogène lorsqu'elle est comprimée isostatiquement à 98 MN/m$^2$ ou plus.

## Patentansprüche

1. Verfahren zur Herstellung eines Pulvers aus reinem Aluminiumoxid oder reinem, nichtstöchiometrischem Aluminiumoxid-Magnesiumoxid-Spinell aus Zusammensetzungen auf Basis von Ammoniumalaun, bei dem man eine Entwässerung des Alauns in Gegenwart eines Blähmittels, wie z. B. eines Kohlenstoffhydrats und/oder Harnstoff, durchführt, dadurch gekennzeichnet, daß man den geschmolzenen Alaun derart entwässert, daß man entwässerte Salze enthält, deren Volumenmasse in loser Schüttung unter 0,2 kg dm$^{-3}$ ist, und daß man dieser Entwässerung eine Kalzinierung nach einem Erhitzungsprogramm folgen läßt, das wenigstens eine Zwischenstufe zwischen 750 und 850°C einer solchen Dauer aufweist, daß am Ausgang dieser Stufe der Restschwefelgehalt 3% nicht übersteigt, wonach die Endkalzinierungsstufe bei einer Temperatur im Bereich von 900 bis 1050°C durchgeführt wird.

2. Verfahren nach Anspruch 1, bei dem der entwässerte Alaun mit Volumenmasse in loser Schüttung unter 0,2 kg dm$^{-3}$ im Festbett kalziniert wird, nachdem er tablettiert, granuliert oder kompaktiert worden ist.

3. Verfahren nach Anspruch 1, bei dem die Kalzinierung im Drainierbett mit einem Durchsatz an Drainiergas über demjenigen durchgeführt wird, der der Mindestfluidisiergeschwindigkeit des Produkts entspricht.

4. Verfahren nach Anspruch 2 oder 3, bei dem das Gas, das das Bett durchströmt, Wasserdampf oder Schwefeloxide enthält.

5. Aluminiumoxid- oder nichtstöchiometrisches Aluminiumoxid-Magnesiumoxid-Spinellpulver, das nach einem der Ansprüche 1 bis 4 hergestellt ist, mit einem Gehalt an Restschwefel von höchstens 0,5%, einer spezifischen Oberfläche über 145 m$^2 \cdot$ g$^{-1}$ und einem porösen unimodalen homogenen Gefüge, wenn es isostatisch mit 98 MN/m$^2$ oder mehr komprimiert wird.

## Claims

1. Process for the preparation of a powder of pure alumina or of pure non-stoichiometric alumina-magnesia spinel starting from compositions based on ammonium alum, in which dehydration of the alum is carried out in the presence of a swelling agent such as a carbohydrate and/or urea, characterised in that the molten alum is dehydrated so as to produce dehydrated salts the bulk density of which is lower than 0.2 kg dm$^{-3}$ and that this dehydration is followed by a calcination according to a heating schedule incorporating at least one intermediate plateau situated between 750 and 850°C of such duration that at the end of the said plateau the residual sulphur content does not exceed 3%, the final stage of calcination being carried out at a temperature situated between 900 and 1050°C.

2. Process according to Claim 1, in which the dehydrated alum of bulk density below 0.2 kg dm$^{-3}$ is calcined in a fixed bed after having been pelleted, granulated or compacted.

3. Process according to Claim 1, in which the calcination is carried out in a drained bed with a flow of drainage gas greater than that corresponding to the minimum fluidisation velocity of the product.

7

4. Process according to Claim 2 or 3, in which the gas which passes through the bed contains water vapour or sulphur oxides.

5. Powder of alumina or of non-stoichiometric alumina-magnesia spinel prepared according to one of Claims 1 to 4, having a residual sulphur content not exceeding 0.5%, a specific surface greater than 145 $m^2$ $g^{-1}$ and a homogenous unimodal porous structure when it is compressed isostatically at 98 MN/$m^2$ or above.